(19) Europäisches Patentamt
European Patent Office
Office européen des brevets

(11) **EP 2 068 521 B1**

(12) **EUROPEAN PATENT SPECIFICATION**

(45) Date of publication and mention
of the grant of the patent:
**14.08.2013 Bulletin 2013/33**

(51) Int Cl.:
*H04L 27/38* *(2006.01)*

(21) Application number: **07122587.4**

(22) Date of filing: **07.12.2007**

(54) **QAM phase error detector**

QAM-Phasenfehlerdetektor

Détecteur d'erreur de phase QAM

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**BA HR MK RS**

(43) Date of publication of application:
**10.06.2009 Bulletin 2009/24**

(73) Proprietor: **Advantech Wireless Inc.
Dorval QC H9P 1G1 (CA)**

(72) Inventor: **Grenabo, Håkan
443 60, STENKULLEN (SE)**

(74) Representative: **Nilsson, Lars-Magnus et al
Awapatent AB
Södra Hamngatan 37-41
Box 11394
404 28 Göteborg (SE)**

(56) References cited:
**EP-A- 0 692 896      EP-A- 1 313 279
EP-A- 1 418 724      US-B1- 6 560 294**

**Description**

Field of the invention

The present invention relates to a method for reducing cycle slips in a carrier recovery loop for a phase detector. The present invention also relates to a corresponding phase detector.

Description of the related art

A challenge for a wireless receiver is to operate efficiently even when the transmission is subject to noise. The effect of thermal and phase noise must as far as possible be suppressed to achieve a high transfer rate. In traditional Quadrature Amplitude Modulation (QAM), a phase detector is used for providing a decision directed phase estimation of a received signal, and the phase of the received signal is in a feedback manner compared with a phase of an estimated symbol, thereby generating a phase error estimate. The estimate is then used for improving the error rate of the transmission.

When working in a low signal-to-noise ratio (SNR) environment, due to decision errors simple decision directed phase estimation may give increasingly worse result, eventually resulting in a cycle slip, i.e. the constellation diagram is rotated by the periodicity angle of the modulation (90 degrees for e.g. 16-QAM and 64-QAM). A cycle slip is generally fatal for error correction codes as the soft information may be good, but the hard decision is wrong. The effect of a cycle slip is generally that the entire Forward Error Correction (FEC) block is lost. Clearly, to make use of a sophisticated FEC scheme, the sum of the thermal noise and the carrier phase noise must be low enough so that cycle slips will contribute less to the total bit error rate than the additive thermal noise at the detector.

This problem might be overcome by lowering the transmission rate; however, as there is an increasing demand for higher transmission rates, this is not an option. Instead, complex hardware is suggested, such as for example using a high performance VCO (Voltage Controlled Oscillator). However, solutions involving high performance hardware are generally expensive, thereby increasing the cost of the receiver.

An alternative solution to using a high performance VCO is disclosed in US 5,796,786, providing a phase error detection method that is applied to a QAM receiver. In the disclosed method, a decided I-channel level value is chosen approximating the phase-corrected I-channel data among predetermined reference I-channel level values. A phase error value for the received data is obtained by subtracting the decided I-channel level value from the phase-corrected I-channel data, and multiplying the sign of the difference by the difference itself, and applying a weight value from a predetermined weighting function to the phase error value weighted phase error value, which is fed back to be used for phase correction of received data. However, the disclosed method still does not provide an adequate reduction of cycle slips, and will thus not provide a solution to the demand for higher transmission rates and for use under low SNR conditions.

Further attention is drawn to US5684842, relating to a carrier recovery circuit including a correction circuit for correcting phase differences which appear between a complex input signal and a local carrier supplied by a local oscillator. The correction circuit defines zones in a plane defined by in-phase components and quadrature components of the complex signal. Each zone includes a respective state of a constellation that is used for encoding the signal during transmission. When a point representing the signal in the I/Q plane is subjected to a decision, the correction circuit produces a correction signal proportional to a measured phase difference. When the point lies outside the zones, the correction circuit produces a correction signal that varies as a function of the measured phase difference to which a weighting factor, dependent on the distance from the point to the nearest zone, is applied.

US2004105396 relates to a method and device for demodulating a signal in a packet communications system, the signal comprises at least one burst representing data samples relative to one or more users. The method comprises at least one step of phase estimation and tracking during at least the duration of the burst in using a frequency assumption test.

US6560294 relates to a cable modem including a demodulator having an improved carrier recovery circuit. The cable modem demodulates phase-modulated signals, including phase and amplitude modulated signals such as quadrature amplitude modulation (QAM) information.

EP1313279 relates to a method for compensating phase impairments in a signal, more particularly when the signal is modulated with a modulation comprising at least a phase modulation component.

Object of the invention

There is therefore a need for an improved method for reducing cycle slips in a carrier recovery loop for a phase detector, which method at least alleviates the problems according to the prior art while providing further improvements in terms of accuracy and the possibility to allow for higher transmission rates.

Summary of the invention

According to an aspect of the invention, the above object is met by a method as defined by claim 1.

Advantages with the present invention includes reduction of cycle slips without using a complex, and expensive, hardware solution, at the same time as it is possible to suppress the effects of decision errors. This enables an improvement in BER (Bit Error Rate) and allows for a higher gain in the carrier recovery loop in a low SNR environment. According to the invention, the BER is improved by including a weight function taking into account a combination of the amplitude and phase of the received samples and a probability measure for a specifically transmitted symbol. For example, a sample data point positioned close to the border between two decision points in a constellation diagram (i.e. adjacent to the border of the "decision area" surrounding the closest decision point in a modulation scheme) will have a lower weight than a sample point close to the decision point.

In a preferred embodiment of the present invention, the phase detector is a QAM phase detector. In the case of QAM, the amplitude of two waves, 90 degrees out-of-phase with each other (in quadrature) are changed (modulated or keyed) to represent the data signal, thus the received sample having an in-phase (I) and quadrature-phase (Q) component. Thus, the skilled addressee understands the difference between a received sample and a transmitted symbol, where for QAM modulation the data to be transmitted is mapped to actual symbols. Accordingly, each symbol in the QAM symbol map (also sometimes denoted constellation plot) is distinguished by a unique phase and amplitude. In addition, the M-ary of the modulation scheme defines how many symbols are in the specific symbol map.

For example, 4-QAM has a symbol map with 4 symbols and 256-QAM has a symbol map of 256 symbols. Accordingly, the disclosed method is useful in relation to for example one of a 4-QAM, a 8-QAM, a 16-QAM, a 32-QAM, a 64-QAM, a 128-QAM, a 256-QAM or any other higher order QAM phase detector. The disclosed method is also useful with for example 8PSK or any similar modulation type. With for example 4-QAM modulation, each symbol represents two bits of information. When sending an actual symbol stream, every two samples are grouped to generate the corresponding symbol. For example, the data bit sequence (0, 1, 0, 0, 1, 0) would be grouped into three symbols: (01, 00, 10). Thus, three symbols are required to represent the entire data bit sequence. This is in contrast to for example 64-QAM which contains 64 unique symbols. As a result of the high symbol number, each symbol in 64 QAM represents 6 bits of information. Thus, the data bit sequence (0, 1, 0, 0, 1, 0) can be represented by one symbol (010010).

As a further enhancement, it is possible to optimize the determination of the phase error estimate based on a predetermined SNR for the input signal. Additionally, the determination of the phase error estimate can be further based on the reliability of the sample. That is, the weight calculation depends on what SNR to optimize for, where at high SNR the transition regions can be smaller than with low SNR. With only a minor degradation in performance, the function values can be pre-calculated for a fixed SNR operating point. Also, the amplitude of the sample is weighed in; the rationale behind this is that the effect of a decision error - the error in the phase error measure - is inversely proportional to the amplitude of the signal vector.

Preferably, the determination of the phase error estimate, $E_{ij}^{0}$ (i.e. the phase error estimate for a specific sample) is calculated according to

$$E_{ij}^{0} = \left( P_{ij} \bullet \Phi_{ij} \right) \cdot A_{ij}$$

where $P_{ij}$ represents the vector of probabilities of transmission of a specific sample in relation to each constellation point for the phase detector, $\Phi_{ij}$ represents the vector of hard phase error estimates, and $A_{ij}$ represents the amplitude for the received sample. A hard estimation relates whether a sample should be decoded as a "1" or as a "0", where in comparison a soft decision comprises the "hard" decision and an indication of the level of confidence to be placed in the estimation. A further discussion relation to the determination of the phase error estimate is provided below in the detailed description of the invention.

According to a further aspect of the invention, there is provided a phase detector as defined by claim 3.

This aspect of the invention provides similar advantages as according to the above discussed method for reducing cycle slips in a carrier recovery loop for a phase detector, including for example the possibility to suppress the effects of decision errors, which enables an improvement in BER by allowing for a higher gain in the carrier recovery loop. The phase detector according to the invention is preferably, but not exclusively, used as a component in digital cable television and cable modem applications, as a component in a digital telecommunication system, or as a component in a satellite television or satellite communication system.

According to a still further aspect of the present invention there is provided a computer program product as defined by claim 6. In a high performance and high speed environment, the phase detector is preferably implemented in an ASIC or an FPGA.

Brief description of the drawings

These and other aspects of the present invention will now be described in more detail, with reference to the appended drawings showing currently preferred embodiments of the invention, in which:

Figure 1 is a block diagram of a receiver comprising a decision directed carrier phase recovery function;
Figure 2 is a block diagram illustrating decision directed carrier recovery loop comprising a prior art phase error estimator;
Figure 3 is a block diagram illustrating a carrier recovery loop comprising a phase error estimator adapted in accordance with the present invention;
Figure 4 shows a diagram illustrating the phase error estimation points for 16-QAM; and
Figure 5 shows a constellation diagram for 16-QAM including a received sample.

Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

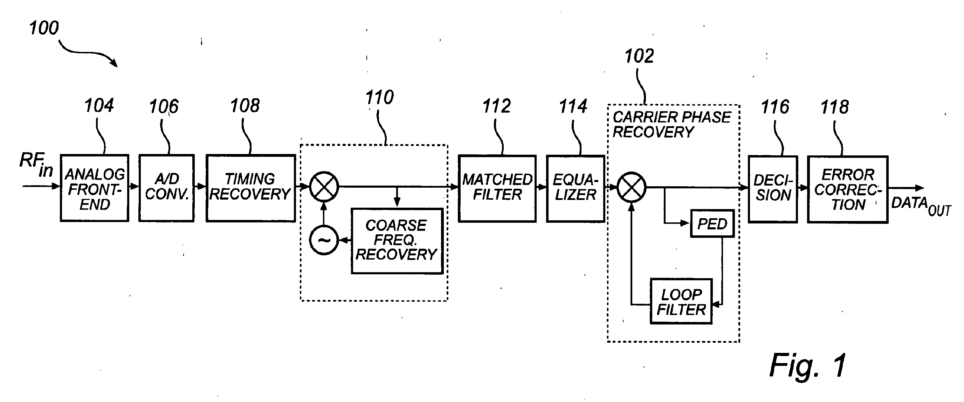

Referring now to the drawings and to figure 1 in particular, there is depicted a block diagram of a receiver 100 in a digital communication system comprising a decision directed carrier phase recovery function 102. The block diagram in figure 1 and related description provides a coarse illustration of a receiver where the phase detector according to the present invention can be implemented. The skilled addressee understands that the below description of the receiver is generalized and provided at a high level for not obscuring the description of the present invention.

Initially, an analog front-end 104 preconditions a received analog input signal $RF_{in}$ for an A/D converter 106 by frequency shifting and/or level adjustment. In turn, the A/D converter 106 converts the analog input signal $RF_{in}$ to digital samples. A timing recovery 108 synchronizes the digital samples in time to the symbol frequency and outputs a fixed number of samples per symbol interval. Thereafter, a coarse frequency recovery function 110 corrects for large frequency deviation in the received signal. It outputs digital samples close enough to zero frequency to enable the carrier phase recovery to capture the signal. A matched filter 112 then maximizes the signal-to-noise ratio in the signal, after which an equalizer 114 corrects for impairments in the analog channel.

After this, the carrier phase recovery function 102 removes any residual frequency offset and suppresses phase noise in the signal. Subsequently, a decision function 116 produces a symbol decision for each received symbol, and possibly also quality information for the decision, and finally, an error correction function 118 corrects for decision errors using redundant information in the received data, and provides a digital data output Dataout.

The carrier phase recovery function 102, and possibly additional blocks of the block diagram in figure 1, is preferably implemented in a control unit, where the control unit may include a microprocessor, a microcontroller, a programmable digital signal processor or another programmable device. The control unit may also, or instead, include an application specific integrated circuit (ASIC), a programmable gate array, a programmable array logic, a programmable logic device, or a digital signal processor. Where the control unit includes a programmable device such as the microprocessor or microcontroller mentioned above, the processor may further include computer executable code that controls operation of the programmable device.

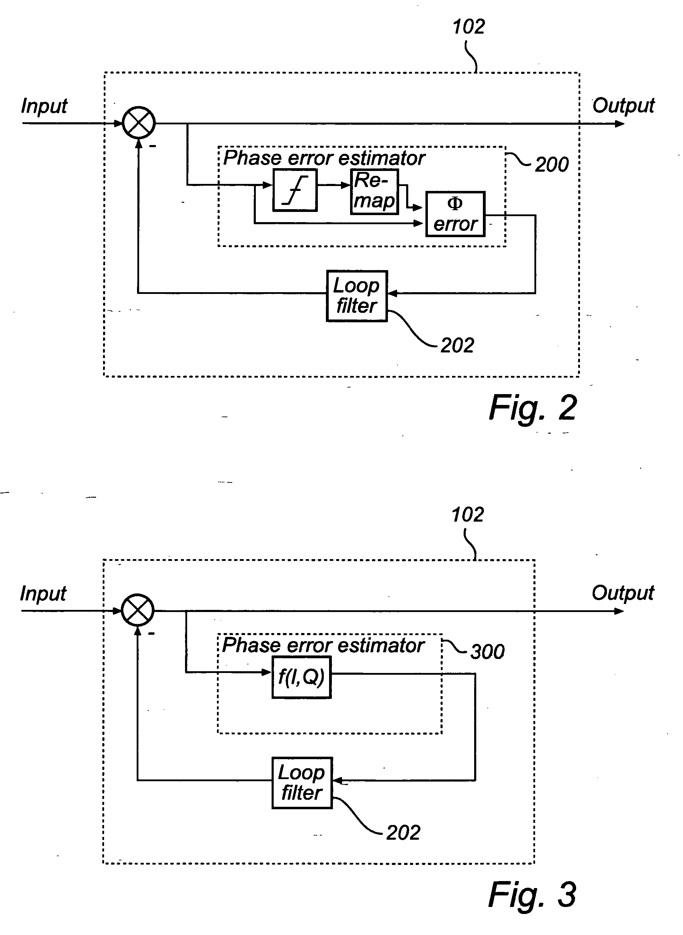

In figure 2 it is provided a detailed illustration of the carrier phase recovery function 102 in figure 1, comprising a prior art phase error estimator 200. In this prior art implementation, a hard decision is taken, and the phase of the received signal is compared to the phase of the estimated symbol which is taken as a phase error estimate. This estimate is then fed into the loop filter 202. The implementation of the loop filter 202 is generally application specific. The output phase of the loop filter is then subtracted from the input signal to close the loop. That is, the phase error estimate is used for improving the BER of the transmission.

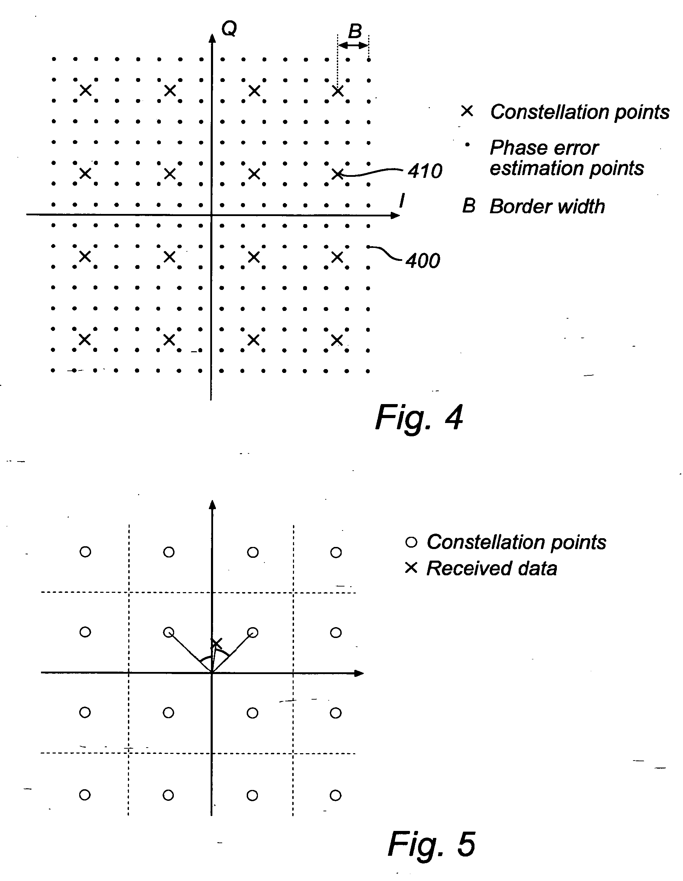

Turning now to figure 3, which also provides a detailed illustration of the carrier phase recovery function 102 in figure 1, but where the prior art phase error estimator of figure 2 has been exchanged for an improved phase error detector 300 according to the present invention. In the phase error detector 300, the phase error estimate is conversely to the prior art phase error detector 200 calculated by a function over the signal space, e.g. the sampled I and Q values comprised in the received input signal. The definition space of the function covers the area of the constellation diagram (see figure 4) plus a surrounding "border" and gives the phase error estimate. The density of points 400 (i.e. denoted • in the diagram of figure 4), and the resolution of the phase error estimate are design parameters coming from a trade-off between performance and realization constraints. The constellation diagram in figure 4 provides an illustration (16-QAM, 16x16 phase error estimation points 400) of the phase error estimation points 400 in relation to the constellation points 410 (i.e. denoted X in the diagram of figure 4).

Accordingly, when considering a sample falling close to the boundary between two decision regions as shown in figure 5, the prior art phase error estimator 200 would give a phase error measure of +45° or -45° depending on which hard decision is made. In case of a wrong decision, the carrier recovery loop will get a 90° hit in the wrong direction. If the loop gain is high, the carrier phase will be shifted to make the probability of another symbol error higher, eventually causing a cycle slip. If the reliability of the decision is weighed in, the received sample indicated in figure 5 will get a weight close to zero, and will consequently have little impact on the carrier phase. The weight calculation depends on what SNR to optimize for, and at high SNR the transition regions can be smaller than with low SNR. With only a minor degradation in performance, the function values can be pre-calculated for a fixed SNR operating point. As a further enhancement, the amplitude of the sample is weighed in, where the rationale behind this is that the effect of a decision error, i.e. the error in the phase error measure is inversely proportional to the amplitude of the signal vector.

The below description provides a theoretical definition of the determination of the phase error estimate in accordance with the present invention. The theoretical definition is given as a non limiting example for allowing the skilled addressee to understand and carry out the method according to the present invention. Thus:

1. Let K be the number of points in the signal constellation, i.e. the constellation points 410 in figure 4.

2. Let $k \in [1,K]$ be the index in the enumeration of points in the signal constellation (order is irrelevant).

3. Let $x_k$ (i.e. the points 410 in the signal constellation in figure 4) be the set of complex-valued points in the signal constellation.

4. Let N be the number of elements per dimension in the phase error estimator table.

5. Let i and j be the indices in the two-dimensional phase error estimator table

$$i, j \in \left[1, N\right]$$

6. Let B be a design parameter describing the size of the "border" surrounding the constellation points where the phase error estimator table is defined.

7. Let $I_{Min}$, $I_{Max}$, $Q_{Min}$, $Q_{Max}$ be the minimum and maximum values of the real and imaginary parts of the constellation points respectively.

8. Let $y_{ij}$ be the points 400 in figure 4 in the complex signal plane where the elements of the phase error estimator table are calculated. These points are then given by

$$\mathrm{Re}(y_{ij}) = I_{Min} - B + \frac{i-1}{N-1} \cdot (I_{Max} - I_{Min} + 2B)$$

and

$$\mathrm{Im}(y_{ij}) = Q_{Min} - B + \frac{j-1}{N-1} \cdot (Q_{Max} - Q_{Min} + 2B)$$

9. Let $\Delta$ be a matrix with elements $\Delta_{ij}$ where each element is in its turn a vector with elements, i.e. the distance from each definition point 400 in the phase error estimator table to each point 410 in the constellation set

$$\left(\Delta_{ij}\right)_k = \left|y_{ij} - x_k\right|$$

10. Let SNR, which is a design parameter, be the optimization value for the signal-to-noise ratio (e.g. select suitable SNR value).

11. Let σ be the noise standard deviation, e.g. white Gaussian noise, according to

$$\sigma = \sqrt{\frac{1}{K} \cdot \sum_{k=1}^{K} x_k^{\,2}} \cdot 10^{-\frac{SNR}{20}}$$

12. Let P be a matrix with elements $P_{ij}$, where each element is in its turn a vector with elements, and corresponds to the probability of each constellation point being sent given the received signal sample

$$\left(P_{ij}\right)_k = \frac{1}{\sqrt{2\pi}\cdot\sigma} \cdot \exp(-\frac{\left[\left(\Delta_{ij}\right)_k\right]^2}{2\sigma^{\,2}})$$

13. Let Φ be a matrix with elements $\Phi_{ij}$, where each element is in its turn a vector with elements, and corresponds to the phase error for each constellation point given the received signal sample

$$\left(\Phi_{ij}\right)_k = \arg(y_{ij}x_k^{*})$$

14. Let A be a matrix with elements $A_{ij}$, i.e. the amplitude in every point, where

$$A_{ij} = \left|y_{ij}\right|$$

15. Let $E_{ij}^{0}$ be a matrix with elements, where $E_{ij}^{0}$ represents the phase error estimate for a specific sample

$$E_{ij}^{0} = \left(P_{ij} \bullet \Phi_{ij}\right)\cdot A_{ij}$$

where $P_{ij}$ and $\Phi_{ij}$ are vectors that are inner multiplied.

16. Let Y be a matrix with hard decision coordinates $Y_{ij}$ for each definition point $y_{ij}$ of the phase error estimator table

$$Y_{ij} = x_{(m_{ij})}$$

where $m_{ij}$ is selected to minimize $(\Delta_{ij})_m$.

17. Let $\Psi$ be a matrix with elements, where $\Psi$ represents the hard decision phase error between the points $y_{ij}$ and the corresponding hard decision points $Y_{ij}$

$$\Psi_{ij} = \arg(y_{ij}Y_{ij}^{*})$$

18. Let C be a scale factor

$$C = \frac{\sum_{i=1}^{N}\sum_{j=1}^{N}\Psi_{ij}^{2}}{\sum_{i=1}^{N}\sum_{j=1}^{N}(E_{ij}^{0})^{2}}$$

19. And finally, let $E_{ij}$ be the elements in the phase error estimator table

$$E_{ij} = C \cdot E_{ij}^{0}$$

That is, the scale factor C serves to normalize the average phase error to the same value as the hard decision phase error making the loop gain figures comparable.

Thus, in conclusion, it is according to the present invention possible to provide a novel method for reduction of cycle slips in a phase detector without using a high performance, and expensive, hardware solution, at the same time as it is possible to suppress the effects of decision errors which enables higher gain, thereby giving an improvement in Bit Error Rate (BER) in low SNR conditions.

Furthermore, the skilled addressee realizes that the present invention by no means is limited to the preferred embodiments described above. On the contrary, the skilled addressee understands that many modifications and variations are possible within the scope of the appended claims.

**Claims**

1.  A method for reducing cycle slips in a carrier recovery loop (102) for a QAM phase detector, the method comprising the steps of:

    - receiving an input signal consisting of samples, each received sample having an in-phase (I) and quadrature-phase (Q) component;
    - providing the input signal to a phase error estimator (300) adapted to determine a phase error estimate;
    - providing the phase error estimate to a loop filter (202), and
    - forming an output signal from the carrier recovery loop by subtracting an output from the loop filter from the input signal,

    wherein the phase error estimate is determined based on a combination of the amplitude and phase of the received samples and a probability measure $P_{ij}$ for a specifically transmitted symbol, thereby improving phase tracking performance of the carrier recovery loop (102), and

said probability measure for each sample is determined according to the relation:

$$(P_{ij})_k = \frac{1}{\sqrt{2\pi} \cdot \sigma} \cdot \exp(-\frac{[(\Delta_{ij})_k]^2}{2\sigma^2})$$ ,

where:
k is the index in the enumeration of points in the signal constellation;
i and j are indices in a two-dimensional phase error estimator table;
$\sigma$ is the noise standard deviation; and
$\Delta_{ij}$ is given by the relation:

$$(\Delta_{ij})_k = |y_{ij} - x_k|$$ ,

where:
$y_{ij}$ are the points in the complex signal plane where the elements of the phase error estimator table are calculated and
$X_k$ are the points in the in the constellation set in the complex signal plane.

2.

Method according to claim 1, wherein the determination of the phase error estimate ( $E_{ij}^{0}$ ) is further dependent on a reliability of each received sample, according to:

$$E_{ij}^{0} = (P_{ij} \bullet \Phi_{ij}) \cdot A_{ij}$$

where $P_{ij}$ represents the vector of probabilities of transmission of each constellation point given said received sample, $\Phi_{ij}$ represents a phase error for each constellation point given said received sample, and $A_{ij}$ represents the amplitude for the received sample.

3. A QAM phase detector, including a carrier recovery loop (102) adapted for reducing cycle slips, the QAM phase detector comprising:

- means for receiving an input signal consisting of samples, each received sample having an in-phase (I) and quadrature-phase (Q) component;
- means for providing the input signal to a phase error estimator (300);
- means for determining a phase error estimate;
- a loop filter (202);
- means for providing the phase error estimate to the loop filter, and
- means for forming an output signal from the carrier recovery loop (102) by subtracting an output from the loop filter from the input signal,

wherein the phase error estimate is determined based on a combination of the amplitude and phase of the received samples and a probability measure $P_{ij}$ for a specifically transmitted symbol, thereby improving phase tracking performance of the carrier recovery loop (102), and
said probability measure for each sample is determined according to the relation:

$$(P_{ij})_k = \frac{1}{\sqrt{2\pi}\cdot\sigma}\cdot\exp(-\frac{[(\Delta_{ij})_k]^2}{2\sigma^2})$$
,

where:
k is the index in the enumeration of points in the signal constellation;
i and j are indices in a two-dimensional phase error estimator table;
$\sigma$ is the noise standard deviation; and
$\Delta_{ij}$ is given by the relation:

$$(\Delta_{ij})_k = |y_{ij} - x_k|$$
,

where:
$y_{ij}$ are the points in the complex signal plane where the elements of the phase error estimator table are calculated and
$X_k$ are the points in the in the constellation set in the complex signal plane.

4.

Phase detector according to claim 3, wherein the means for determine of the phase error estimate ( $E_{ij}^0$ ) is further configured to determine the phase error estimate based on the reliability of each received sample in accordance with:

$$E_{ij}^0 = (P_{ij} \bullet \Phi_{ij})\cdot A_{ij}$$

where $P_{ij}$ represents the vector of probabilities of transmission of each constellation point given said received sample, $\Phi_{ij}$ represents a phase error for each constellation point given said received sample, and $A_{ij}$ represents the amplitude for the received sample.

5. Use of the QAM phase detector according to claim 3 or 4 as a component in at least one of digital cable television system, cable modem application, a digital telecommunication system, a satellite television system and satellite communication system

6. A computer program product comprising a computer readable medium having stored thereon computer program means for causing a control unit to control phase detecting means for reducing cycle slips in a carrier recovery loop (102), wherein the computer program product comprises:

   - code for receiving an input signal consisting of samples, each received sample having an in-phase (I) and quadrature-phase (Q) component;
   - code for providing the input signal to a phase error estimator (300) adapted to determine a phase error estimate;
   - code for providing the phase error estimate to a loop filter (202); and
   - code for forming an output signal from the carrier recovery loop by subtracting an output from the loop filter from the input signal,

wherein the phase error estimate is determined based on a combination of the amplitude and phase of the received samples and a probability measure $P_{ij}$ for a specifically transmitted symbol, thereby improving phase tracking performance of the carrier recovery loop (102), and
said probability measure for each sample is determined according to the relation:

$$(P_{ij})_k = \frac{1}{\sqrt{2\pi \cdot \sigma}} \cdot \exp\left(-\frac{[(\Delta_{ij})_k]^2}{2\sigma^2}\right),$$

where:
k is the index in the enumeration of points in the signal constellation;
i and j are indices in a two-dimensional phase error estimator table;
$\sigma$ is the noise standard deviation; and
$\Delta_{ij}$ is given by the relation:

$$(\Delta_{ij})_k = |y_{ij} - x_k|,$$

where:
$y_{ij}$ are the points in the complex signal plane where the elements of the phase error estimator table are calculated and
$X_k$ are the points in the in the constellation set in the complex signal plane.

**Patentansprüche**

1. Verfahren zum Reduzieren von Cycle-Slips in einer Trägerrückgewinnungsschleife (102) für einen QAM-Phasedetektor, wobei das Verfahren folgende Schritte umfasst:

- Empfangen eines Eingangssignals, das aus Abtastungen besteht, wobei jede empfangene Abtastung eine In-Phasen (I) und Quadratur-Phasen (Q)-Komponente aufweist;
- Einspeisen des Eingangssignals in eine Phasenfehlerschätzvorrichtung (300), die dafür ausgelegt ist, eine Phasenfehlerschätzung zu bestimmen;
- Einspeisen der Phasenfehlerschätzung in ein Schleifenfilter (202), und
- Bilden eines Ausgangssignals aus der Trägerrückgewinnungsschleife durch Subtrahieren eines Ausgangs aus dem Schleifenfilter von dem Eingangssignal,

wobei die Phasenfehlerschätzung auf der Basis einer Kombination der Amplitude und der Phase der empfangenen Abtastungen und eines Wahrscheinlichkeitsmaßes $P_{ij}$ für ein speziell gesendetes Symbol bestimmt wird, wodurch die Phasenverfolgungsleistung der Trägerrückgewinnungsschleife (102) verbessert wird, und das Wahrscheinlichkeitsmaß für jede Abtastung gemäß folgender Beziehung bestimmt wird:

$$(P_{ij})_k = \frac{1}{\sqrt{2\pi \cdot \sigma}} \cdot \exp\left(-\frac{[(\Delta_{ij})_k]^2}{2\sigma^2}\right),$$

wobei
k der Index in der Aufzählung von Punkten in der Signalkonstellation ist;
i und j Indizes in einer zweidimensionalen Phasenfehlerschätzvorrichtungstabelle sind;
$\sigma$ die Rauschstandardabweichung ist; und
$\Delta_{ij}$ durch folgende Beziehung gegeben ist:

$$\left( \Delta_{ij} \right)_k = \left| y_{ij} - x_k \right|,$$

wobei

$y_{ij}$ die Punkte in der komplexen Signalebene sind, wo die Elemente der Phasenfehlerschätzvorrichtungstabelle berechnet werden, und

$X_k$ die Punkte in dem Konstellationssatz in der komplexen Signalebene sind.

2.

Verfahren nach Anspruch 1, wobei die Bestimmung der Phasenfehlerschätzung ($E_{ij}^0$) des Weiteren von einer Zuverlässigkeit jeder empfangenen Abtastung gemäß:

$$E_{ij}^0 = \left( P_{ij} \bullet \Phi_{ij} \right) \cdot A_{ij}$$

abhängig ist, wobei $P_{ij}$ den Vektor von Übertragungswahrscheinlichkeiten jedes Konstellationspunktes auf der Grundlage der empfangenen Abtastung darstellt, $\Phi_{ij}$ einen Phasenfehler für jeden Konstellationspunkt auf der Grundlage der empfangenen Abtastung darstellt, und $A_{ij}$ die Amplitude für die empfangene Abtastung darstellt.

3.  QAM-Phasedetektor, der eine Trägerrückgewinnungsschleife (102) enthält, die dafür ausgelegt ist, Cycle-Slips zu reduzieren, wobei der QAM-Phasedetektor Folgendes umfasst:

- ein Mittel zum Empfangen eines Eingangssignals, das aus Abtastungen besteht, wobei jede empfangene Abtastung eine In-Phasen (I) und Quadratur-Phasen (Q)-Komponente aufweist;
- ein Mittel zum Einspeisen des Eingangssignals in eine Phasenfehlerschätzvorrichtung (300);
- ein Mittel zum Bestimmen einer Phasenfehlerschätzung;
- ein Schleifenfilter (202);
- ein Mittel zum Einspeisen der Phasenfehlerschätzung in das Schleifenfilter, und
- ein Mittel zum Bilden eines Ausgangssignals aus der Trägerrückgewinnungsschleife (102) durch Subtrahieren eines Ausgangs aus dem Schleifenfilter von dem Eingangssignal,

wobei die Phasenfehlerschätzung auf der Basis einer Kombination der Amplitude und der Phase der empfangenen Abtastungen und eines Wahrscheinlichkeitsmaßes $P_{ij}$ für ein speziell gesendetes Symbol bestimmt wird, wodurch die Phasenverfolgungsleistung der Trägerrückgewinnungsschleife (102) verbessert wird, und das Wahrscheinlichkeitsmaß für jede Abtastung gemäß folgender Beziehung bestimmt wird:

$$\left( P_{ij} \right)_k = \frac{1}{\sqrt{2\pi} \cdot \sigma} \cdot \exp\left( -\frac{\left[ \left( \Delta_{ij} \right)_k \right]^2}{2\sigma^2} \right),$$

wobei

k der Index in der Aufzählung von Punkten in der Signalkonstellation ist;

i und j Indizes in einer zweidimensionalen Phasenfehlerschätzvorrichtungstabelle sind;

$\sigma$ die Rauschstandardabweichung ist; und

$\Delta_{ij}$ durch folgende Beziehung gegeben ist:

$$\left(\Delta_{ij}\right)_k = \left| y_{ij} - x_k \right|,$$

wobei

$y_{ij}$ die Punkte in der komplexen Signalebene sind, wo die Elemente der Phasenfehlerschätzvorrichtungstabelle berechnet werden, und

$X_k$ die Punkte in dem Konstellationssatz in der komplexen Signalebene sind.

4.

Phasedetektor nach Anspruch 3, wobei das Mittel zum Bestimmen der Phasenfehlerschätzung ($E_{ij}^0$) des Weiteren dafür konfiguriert ist, die Phasenfehlerschätzung auf der Grundlage der Zuverlässigkeit jeder empfangenen Abtastung gemäß:

$$E_{ij}^0 = \left(P_{ij} \bullet \Phi_{ij}\right) \cdot A_{ij}$$

zu bestimmen, wobei $P_{ij}$ den Vektor von Übertragungswahrscheinlichkeiten jedes Konstellationspunktes auf der Grundlage der empfangenen Abtastung darstellt, $\Phi_{ij}$ einen Phasenfehler für jeden Konstellationspunkt auf der Grundlage der empfangenen Abtastung darstellt, und $A_{ij}$ die Amplitude für die empfangene Abtastung darstellt.

5. Verwendung des QAM-Phasedetektors nach Anspruch 3 oder 4 als eine Komponente in einem digitalen Kabelfernsehsystem und/oder einer Kabelmodemanwendung und/oder einem digitalen Telekommunikationssystem und/oder einem Satellitenfernsehsystem und/oder einem Satellitenkommunikationssystem.

6. Computerprogrammprodukt, das ein computerlesbares Medium umfasst, auf dem Computerprogrammmittel gespeichert sind, um eine Steuereinheit zu veranlassen, ein Phasendetektionsmittel so zu steuern, dass Cycle-Slips in einer Trägerrückgewinnungsschleife (102) verringert werden, wobei das Computerprogrammprodukt Folgendes umfasst:

- Code zum Empfangen eines Eingangssignals, das aus Abtastungen besteht, wobei jede empfangene Abtastung eine In-Phasen (I) und Quadratur-Phasen (Q)-Komponente aufweist;
- Code zum Einspeisen des Eingangssignal in eine Phasenfehlerschätzvorrichtung (300), die dafür ausgelegt ist, eine Phasenfehlerschätzung zu bestimmen;
- Code zum Einspeisen der Phasenfehlerschätzung in ein Schleifenfilter (202); und
- Code zum Bilden eines Ausgangssignals aus der Trägerrückgewinnungsschleife durch Subtrahieren eines Ausgangs aus dem Schleifenfilter von dem Eingangssignal,

wobei die Phasenfehlerschätzung auf der Basis einer Kombination der Amplitude und der Phase der empfangenen Abtastungen und eines Wahrscheinlichkeitsmaßes $P_{ij}$ für ein speziell gesendetes Symbol bestimmt wird, wodurch die Phasenverfolgungsleistung der Trägerrückgewinnungsschleife (102) verbessert wird, und das Wahrscheinlichkeitsmaß für jede Abtastung gemäß folgender Beziehung bestimmt wird:

$$\left(P_{ij}\right)_k = \frac{1}{\sqrt{2\pi \cdot \sigma}} \cdot \exp\left(-\frac{\left[\left(\Delta_{ij}\right)_k\right]^2}{2\sigma^2}\right),$$

wobei

k der Index in der Aufzählung von Punkten in der Signalkonstellation ist;

i und j Indizes in einer zweidimensionalen Phasenfehlerschätzvorrichtungstabelle sind;

σ die Rauschstandardabweichung ist; und

Δ$_{ij}$ durch folgende Beziehung gegeben ist:

$$\left(\Delta_{ij}\right)_k = \left|y_{ij} - x_k\right|,$$

wobei

y$_{ij}$ die Punkte in der komplexen Signalebene sind, wo die Elemente der Phasenfehlerschätzvorrichtungstabelle berechnet werden, und

X$_k$ die Punkte in dem Konstellationssatz in der komplexen Signalebene sind.

**Revendications**

**1.** Procédé de réduction de glissements de cycle dans une boucle de récupération de porteuse (102) pour un détecteur de phase QAM, le procédé comprenant les étapes de :+

- la réception d'un signal d'entrée se composant d'échantillons, chaque échantillon reçu ayant une composante en phase (I) et une composante en quadrature de phase (Q) ;
- la fourniture du signal d'entrée à un estimateur d'erreur de phase (300) apte à déterminer une estimation d'erreur de phase ;
- la fourniture de l'estimation d'erreur de phase à un filtre de boucle (202), et
- la formation d'un signal de sortie à partir de la boucle de récupération de porteuse en soustrayant une sortie du filtre de boucle au signal d'entrée,

dans lequel l'estimation d'erreur de phase est déterminée sur la base d'une combinaison de l'amplitude et de la phase des échantillons reçus et d'une mesure de probabilité P$_{ij}$ pour un symbole spécifiquement transmis, en améliorant de ce fait la performance de suivi de phase de la boucle de récupération de porteuse (102), et ladite mesure de probabilité pour chaque échantillon est déterminée selon la relation :

$$\left(P_{ij}\right)_k = \frac{1}{\sqrt{2\pi}.\sigma}. exp\left(-\frac{\left[\left(\Delta_{ij}\right)_k\right]^2}{2\sigma^2}\right)$$

où

k est l'indice de l'énumération de points dans la constellation de signal;

i et j sont des indices dans une table d'estimation d'erreur de phase bidimensionnelle ;

σ est l'écart-type du bruit ; et

Δ$_{ij}$ est donné par la relation :

$$\left(\Delta_{ij}\right)_k = \left|y_{ij} - x_k\right|$$

où

y$_{ij}$ sont les points dans le plan de signal complexe où les éléments de la table d'estimation d'erreur de phase sont calculés ; et

X$_k$ sont les points dans l'ensemble de constellation dans le plan de signal complexe.

**2.**

Procédé selon la revendication 1, dans lequel la détermination de l'estimation d'erreur de phase ( $E_{ij}^0$ ) dépend en outre d'une fiabilité de chaque échantillon reçu, selon :

$$E_{ij}^0 = (\text{P}_{ij} \bullet \Phi_{ij}).\text{A}_{ij}$$

où P$_{ij}$ représente le vecteur de probabilités de transmission de chaque point de constellation compte tenu dudit échantillon reçu, $\Phi_{ij}$ représente une erreur de phase pour chaque point de constellation compte tenu dudit échantillon reçu, et A$_{ij}$ représente l'amplitude pour l'échantillon reçu.

3. Détecteur de phase QAM, comprenant une boucle de récupération de porteuse (102) apte à réduire des glissements de cycle, le détecteur de phase QAM comprenant :

   - un moyen de réception d'un signal d'entrée se composant d'échantillons, chaque échantillon reçu ayant une composante en phase (I) et une composante en quadrature de phase (Q) ;
   - un moyen de fourniture du signal d'entrée à un estimateur d'erreur de phase (300) ;
   - un moyen de détermination d'une estimation d'erreur de phase ;
   - un filtre de boucle (202) ;
   - un moyen de fourniture de l'estimation d'erreur de phase au filtre de boucle, et
   - un moyen de formation d'un signal de sortie à partir de la boucle de récupération de porteuse (102) en soustrayant une sortie du filtre de boucle au signal d'entrée,

dans lequel l'estimation d'erreur de phase est déterminée sur la base d'une combinaison de l'amplitude et de la phase des échantillons reçus et d'une mesure de probabilité P$_{ij}$ pour un symbole spécifiquement transmis, en améliorant de ce fait la performance de suivi de phase de la boucle de récupération de porteuse (102), et ladite mesure de probabilité pour chaque échantillon est déterminée selon la relation :

$$\left(P_{ij}\right)_k = \frac{1}{\sqrt{2\pi}.\sigma} . exp\left(-\frac{\left[(\Delta_{ij})_k\right]^2}{2\sigma^2}\right)$$

où
k est l'indice de l'énumération de points dans la constellation de signal;
i et j sont des indices dans une table d'estimation d'erreur de phase bidimensionnelle ;
σ est l'écart-type du bruit ; et
$\Delta_{ij}$ est donné par la relation :

$$\left(\Delta_{ij}\right)_k = \left|y_{ij} - x_k\right|$$

où
y$_{ij}$ sont les points dans le plan de signal complexe où les éléments de la table d'estimation d'erreur de phase sont calculés ; et
X$_k$ sont les points dans l'ensemble de constellation dans le plan de signal complexe.

4. Détecteur de phase selon la revendication 3, dans lequel le moyen de détermination de l'estimation d'erreur de phase ( $E_{ij}^0$ ) est en outre configuré pour déterminer l'estimation d'erreur de phase sur la base de la fiabilité de chaque échantillon reçu selon :

$$E_{ij}^{0} = (\mathrm{P}_{ij} \bullet \Phi_{ij}).\mathrm{A}_{ij}$$

où $\mathrm{P}_{ij}$ représente le vecteur de probabilités de transmission de chaque point de constellation compte tenu dudit échantillon reçu, $\Phi_{ij}$ représente une erreur de phase pour chaque point de constellation compte tenu dudit échantillon reçu, et $\mathrm{A}_{ij}$ représente l'amplitude pour l'échantillon reçu.

5. Utilisation d'un détecteur de phase QAM selon la revendication 3 ou 4 en tant que composant dans au moins l'un d'un système de télévision câblée numérique, une application de modem câblé, un système de télécommunication numérique, un système de télévision satellitaire et un système de communication satellitaire.

6. Produit de programme informatique comprenant un support lisible par ordinateur sur lequel sont stockés des moyens de programme informatique pour amener une unité de commande à commander à un moyen de détection de phase de réduire des glissements de cycle dans une boucle de récupération de porteuse (102), dans lequel le produit de programme informatique comprend :

    - un code de réception d'un signal d'entrée se composant d'échantillons, chaque échantillon reçu ayant une composante en phase (I) et une composante en quadrature de phase (Q) ;
    - un code de fourniture du signal d'entrée à un estimateur d'erreur de phase (300) apte à déterminer une estimation d'erreur de phase ;
    - un code de fourniture de l'estimation d'erreur de phase à un filtre de boucle (202), et
    - un code de formation d'un signal de sortie à partir de la boucle de récupération de porteuse (102) en soustrayant une sortie du filtre de boucle au signal d'entrée,

dans lequel l'estimation d'erreur de phase est déterminée sur la base d'une combinaison de l'amplitude et de la phase des échantillons reçus et d'une mesure de probabilité $\mathrm{P}_{ij}$ pour un symbole spécifiquement transmis, en améliorant de ce fait la performance de suivi de phase de la boucle de récupération de porteuse (102), et ladite mesure de probabilité pour chaque échantillon est déterminée selon la relation :

$$\left(P_{ij}\right)_{k} = \frac{1}{\sqrt{2\pi}.\sigma} . exp\left(-\frac{\left[\left(\Delta_{ij}\right)_{k}\right]^{2}}{2\sigma^{2}}\right)$$

où
k est l'indice de l'énumération de points dans la constellation de signal; i et j sont des indices dans une table d'estimation d'erreur de phase bidimensionnelle ;
$\sigma$ est l'écart-type du bruit ; et
$\Delta_{ij}$ est donné par la relation :

$$\left(\Delta_{ij}\right)_{k} = \left|y_{ij} - x_{k}\right|$$

où
$y_{ij}$ sont les points dans le plan de signal complexe où les éléments de la table d'estimation d'erreur de phase sont calculés ; et
$X_{k}$ sont les points dans l'ensemble de constellation dans le plan de signal complexe.

RF_in → ANALOG FRONT-END (104) → A/D CONV. (106) → TIMING RECOVERY (108) → (110) [⊗ ← ～ ← COARSE FREQ. RECOVERY] → MATCHED FILTER (112) → EQUA-LIZER (114) → CARRIER PHASE RECOVERY (102) [⊗ → PED → LOOP FILTER] → DECI-SION (116) → ERROR CORREC-TION (118) → DATA_OUT

100

*Fig. 1*

*Fig. 2*

*Fig. 3*

× Constellation points

· Phase error
estimation points

B Border width

Fig. 4

○ Constellation points
× Received data

Fig. 5

**EP 2 068 521 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5796786 A
- US 5684842 A
- US 2004105396 A
- US 6560294 B
- EP 1313279 A